# EUROPEAN PATENT APPLICATION

(11) **EP 4 697 429 A2**
(43) Date of publication of application: **18.02.2026**
(21) Application number: 25195406.1
(22) Date of filing: 12.08.2025
(51) Int. Cl.: H01M 10/0567, H01M 4/62, H01M 10/0525, H01M 10/0568

(54) **SECONDARY BATTERY AND ELECTRONIC DEVICE**

(30) Priority: 14.08.2024 CN 202411113343
(71) Applicant: NINGDE AMPEREX TECHNOLOGY LIMITED, Ningde City, Fujian Province 352100 (CN)
(72) Inventor: WANG, Kefei, Ningde City, Fujian Province, 352100 (CN); ZHUANG, Ruirui, Ningde City, Fujian Province, 352100 (CN)
(74) Representative: Icosa

(57) **Abstract**

A secondary battery, including: a positive electrode, a negative electrode, and an electrolyte. The positive electrode includes a positive current collector and a positive active material layer formed on the positive current collector, the positive active material layer includes a positive active material and polyamideimide, and the electrolyte includes a compound having a sulfur-oxygen double bond and lithium difluorophosphate. The flexibility of the positive electrode can be improved, the internal resistance of the secondary battery at a low temperature can also be reduced, and the storage characteristic of the secondary battery at a high temperature can be further improved.

## Description

### TECHNICAL FIELD

This application relates to the field of energy storage, and in particular, to a secondary battery and an electronic device.

### BACKGROUND

Lithium-ion batteries have characteristics of small size, light weight, high energy density, and rechargeable capability, thereby being suitable for a wide range of applications. A lithium-ion battery typically includes battery components such as a positive electrode, a negative electrode, and a separator that isolates the positive electrode from the negative electrode. An electrode (e.g., the positive electrode or negative electrode) generally includes a current collector and an electrode composite material layer formed on the current collector. For example, a positive composite material layer is typically formed by applying and drying a positive electrode slurry on the current collector. The positive electrode slurry is formed by containing a positive active material, a conductive material for improving conductivity, and a binding material for binding the components in a dispersion medium. In addition, polyvinylidene difluoride (PVDF) or the like has conventionally been used as the binding material for forming the positive composite material layer. PVDF is prone to gelation, leading to a decrease in slurry stability and affecting the battery performance. Moreover, PVDF is a fluorine-containing binder, of which polymerization monomer VDF is prepared by dehydrochlorination of 1-chloro-1,1-difluoroethane (R142B). However, R142B is a high-risk environmental pollutant and does not meet the green and sustainable development requirements of the new energy industry. Developed countries such as the EU are gradually restricting its application in the lithium-ion batteries.

### SUMMARY

Embodiments of this application solve the problems in the prior art to some extent by adjusting the composition of a positive electrode and the composition in an electrolyte applied in a secondary battery. The applicants discovered that when a positive active material layer includes a positive active material and polyamideimide, and an electrolyte includes a compound having a sulfur-oxygen double bond and lithium difluorophosphate, a flexibility of a positive electrode can be improved, an internal resistance of a secondary battery at a low temperature can also be reduced, and a storage characteristic of the secondary battery at a high temperature can be further improved, such that this application is completed.

In some embodiments, the positive active material layer further includes an auxiliary, and the auxiliary includes at least one of pentaerythritol tetrabenzoate, trimethyl citrate, triethyl citrate, tributyl citrate, or bis(tridecyl) sodium sulfosuccinate.

In some embodiments, with respect to 100 parts by mass of the electrolyte, the compound having the sulfur-oxygen double bond is 0.05 parts by mass to 2.9 parts by mass, and/or the lithium difluorophosphate is 0.02 parts by mass to 0.59 parts by mass.

In some embodiments, the compound having the sulfur-oxygen double bond includes sulfonate and/or sulfate.

In some embodiments, the sulfonate includes at least one of 1,3-propane sultone, 1,4-butane sultone, 1-fluoro-1,3-propane sultone, 1-methyl-1,3-propane sultone, 1-propene-1,3-sultone, 1-fluoro-1-propene-1,3-sultone, 1-methyl-1-propene-1,3-sultone, or 1,5,2,4-Dioxadithiane 2,2,4,4-tetraoxide.

In some embodiments, the sulfate includes at least one of ethylene sulfate or propylene sulfate.

In some embodiments, the electrolyte further includes an additive C, and the additive C includes at least one of adiponitrile, hexamethyldisiloxane, 1,3-diethenyl-1,1,3,3-tetramethyldisiloxane, lithium bis(oxalato)borate, lithium difluoro(oxalato)borate, lithium tetrafluoro(oxalato)phosphate, or lithium difluorobis(oxalato)phosphate.

In some embodiments, with respect to 100 parts by mass of the electrolyte, the additive C is 0.1 parts by mass to 3 parts by mass.

In some embodiments, with respect to 100 parts by mass of the electrolyte, at least one of the following is satisfied:
1) the adiponitrile is 0.1 parts by mass to 2.4 parts by mass;
2) the hexamethyldisiloxane is 0.01 parts by mass to 0.6 parts by mass;
3) the 1,3-diethenyl-1,1,3,3-tetramethyldisiloxane is 0.01 parts by mass to 1 parts by mass;
4) the lithium bis(oxalato)borate is 0.01 parts by mass to 0.5 parts by mass;
5) the lithium difluoro(oxalato)borate is 0.01 parts by mass to 0.5 parts by mass;
6) the lithium tetrafluoro(oxalato)phosphate is 0.01 parts by mass to 0.5 parts by mass; or
7) the lithium difluorobis(oxalato)phosphate is 0.01 parts by mass to 0.7 parts by mass.

According to another aspect of this application, this application provides an electronic device, including the secondary battery according to this application.

By employing a specific composition of the positive electrode and a specific combination of the electrolyte, this design of this application not only improves the flexibility of the positive electrode, but also reduces the internal resistance of the secondary battery at a low temperature and improves the storage characteristic of the secondary battery at a high temperature.

The additional aspects and advantages of the embodiments of this application may be partially described and shown in the subsequent description or illustrated by the implementation of the embodiments of this application.

### DETAILED DESCRIPTION

Embodiments of this application may be described in detail below. No embodiment of this application is to be construed as a limitation on this application.

Unless otherwise expressly specified, the following terms used in this application have the meanings defined below.

By employing a specific composition of the positive electrode and a specific combination of the electrolyte, this design of this application not only improves the flexibility of the positive electrode, but also reduces the internal resistance of the secondary battery at a low temperature and improves the storage characteristic of the secondary battery at a high temperature.

In one embodiment, this application provides a secondary battery, including a positive electrode, a negative electrode, and an electrolyte as described below.

### I. Positive Electrode

This application relates to a secondary battery and an electronic device. Specifically, this application provides a secondary battery, including: a positive electrode, a negative electrode, and an electrolyte. The positive electrode includes a positive current collector and a positive active material layer formed on the positive current collector, the positive active material layer includes a positive active material and polyamideimide, and the electrolyte includes a compound having a sulfur-oxygen double bond and lithium difluorophosphate. The flexibility of the positive electrode can be improved, the internal resistance of the secondary battery at a low temperature can also be reduced, and the storage characteristic of the secondary battery at a high temperature can be further improved.

The positive electrode includes the positive current collector and the positive active material layer formed on the positive current collector.

The positive active material layer includes the positive active material, and one or more positive active material layers may be provided. The positive active material is any material capable of reversibly intercalating and de-intercalating lithium ions.

The applicants unexpectedly discovered during experiments that adding polyamideimide as a binder in the slurry mixing process of the positive electrode improves the flexibility of an electrode plate, but the internal resistance of the electrode plate is increased, the electrode plate cracks especially at the high temperature, and the active material layer has brittle fracture and powder shedding. The applicants further found that the internal resistance of the electrode plate is significantly reduce in an electrolyte system containing the compound having the sulfur-oxygen double bond and the lithium difluorophosphate. It is speculated that the reason may be that the polyamideimide is prone to swelling in a carbonate electrolyte system, leading to an increase in the internal resistance, while the compound having the sulfur-oxygen double bond and the lithium difluorophosphate significantly inhibit the swelling, thereby reducing the internal resistance of the electrode plate, such that the flexibility of the positive electrode can be improved, the internal resistance of the secondary battery at the low temperature can also be reduced, and the storage characteristic of the secondary battery at the high temperature can be further improved.

Specifically, from the perspective of improving the flexibility of the positive electrode, a mass of the polyamideimide is 0.3 parts by mass to 3 parts by mass with respect to 100 parts by mass of a positive electrode material (including the positive active material, a conductive agent, a binder, and an optional auxiliary). The mass of the polyamideimide is preferably 3 parts by mass or less, more preferably 2.5 parts by mass or less, further preferably 2 parts by mass or less, particularly preferably 1.5 parts by mass or less, preferably 0.3 parts by mass or more, and more preferably 0.5 parts by mass or more. When the mass of the polyamideimide is within the above range, the flexibility of the positive electrode can be effectively improved.

Specifically, the polyamideimide may have any molecular weight, but preferably has a number-average molecular weight ranging from 10,000 to 40,000 so as to further improve the solubility of the polyamideimide in a solvent. The number-average molecular weight is determined by gel permeation chromatography.

Specifically, from the perspective of improving the flexibility of the positive electrode, the positive active material layer further includes an auxiliary, and the auxiliary includes at least one of pentaerythritol tetrabenzoate, trimethyl citrate, triethyl citrate, tributyl citrate, or bis(tridecyl) sodium sulfosuccinate. The auxiliary not only can improve the flexibility of the positive electrode, but also can inhibit the formation of excessively thick films of the compound having the sulfur-oxygen double bond and the lithium difluorophosphate on the surface of the positive electrode.

The positive active material is any material capable of reversibly intercalating and de-intercalating lithium ions. For example, as the positive active material for the secondary battery, a composite metal oxide containing lithium and one or two or more selected from the group consisting of cobalt, manganese, and nickel, or a lithium-containing olivine-type phosphate containing one or two or more selected from iron, cobalt, nickel, and manganese is used. The positive active materials may be used alone or in combination of two or more.

As such lithium composite metal oxide, for example, one or more selected from LiCoO2, LiMn2O4, LiNiO2, LiCol-xNixO2(0.01 < x < 1), LiNixMnyCozO2(x+y+z = 1), a solid solution of Li2MnO3 and LiMO2(M is a transition metal such as Co, Ni, Mn, and Fe), LiNi1/2Mn3/2O4, LiFePO4, LiMnPO4, and LiMn1-xFexPO4(0.01 < x < 1) is preferably listed, and two or more are more preferably listed. A portion of the composite metal oxides with lithium or the lithium-containing olivine-type phosphates may be substituted with other elements, or a portion of cobalt, nickel, manganese, or iron may be substituted with one or more elements selected from Co, Mn, Ni, Mg, Al, B, Ti, V, Nb, Cu, Zn, Mo, Ca, Sr, W, and Zr, or coated with compounds containing the other elements or carbon materials.

From the perspective of increasing the voltage during charging, a potential of the positive electrode is preferably 4.4 V (vs. Li/Li+) or more, more preferably 4.5 V (vs. Li/Li+) or more, and particularly preferably 4.6 V (vs. Li/Li+) or more.

The type of the conductive material for the positive electrode is not limited, and any known conductive material may be used. Examples of the conductive material for the positive electrode include, but are not limited to, carbon blacks such as acetylene black; carbon materials such as amorphous carbon including needle coke; carbon nanotubes; and graphene, etc. The aforementioned conductive materials for the positive electrode may be used alone or in any combination.

The type of a solvent for forming the positive electrode slurry is not limited, as long as the solvent can dissolve or disperse the positive active material, the conductive material, and the positive electrode binder. Examples of the solvent for forming the positive electrode slurry may include any one of aqueous solvents and organic solvents. Examples of aqueous media may include, but are not limited to, water and mixed media composed of alcohol and water, etc. Examples of organic media may include, but are not limited to, aliphatic hydrocarbons such as hexane; aromatic hydrocarbons such as benzene, toluene, xylene, and methylnaphthalene; heterocyclic compounds such as quinoline and pyridine; ketones such as acetone, methyl ethyl ketone, and cyclohexanone; esters such as methyl acetate and methyl acrylate; amines such as diethylenetriamine and N,N-dimethylaminopropylamine; ethers such as diethyl ether, propylene oxide, and tetrahydrofuran; amides such as N-methyl-pyrrolidone, dimethylformamide, and dimethylacetamide; and non-protonic polar solvents such as hexamethylphosphoramide and dimethyl sulfoxide.

The type of the positive current collector is not particularly limited, and the positive current collector may be any material known to be suitable for use as the positive current collector. Examples of the positive current collector may include, but are not limited to, metal materials such as aluminum, stainless steel, nickel plating, titanium, and tantalum; and carbon materials such as carbon cloth and carbon paper. In some embodiments, the positive current collector is a metal material. In some embodiments, the positive current collector is aluminum.

In order to reduce the electronic contact resistance between the positive current collector and the positive active material layer, the surface of the positive current collector may include a conductive auxiliary or a conductive coating. Examples of the conductive auxiliary may include, but are not limited to, carbon and noble metals such as gold, platinum, and silver. Examples of the conductive coating may include a mixture layer containing an inorganic oxide, a conductive agent, and a binder.

The positive electrode may be fabricated by forming the positive active material layer containing the positive active material and the binder on the positive current collector. The manufacture of the positive electrode using the positive active material may be carried out by conventional methods, i.e., the positive active material, the binder, and the conductive material and a thickening agent adopted according to requirements are subjected to dry mixing to form a sheet, and then the resulting sheet is subjected to pressure bonding onto the positive current collector; or the materials are dissolved or dispersed in a liquid medium to prepare a slurry, and the slurry is applied onto the positive current collector and dried, such that the positive active material layer is formed on the current collector, thereby obtaining the positive electrode.

### II. Electrolyte

An electrolyte used in the secondary battery of this application includes an electrolyte and a solvent for dissolving the electrolyte. In some embodiments, the electrolyte of this application includes a compound having a sulfur-oxygen double bond and lithium difluorophosphate.

Since polyamideimide is prone to swelling in a carbonate electrolyte system, the applicants found that when the electrolyte contains the compound having the sulfur-oxygen double bond and the lithium difluorophosphate, the swelling is significantly inhibited, such that the flexibility of the positive electrode can be improved, the internal resistance of the secondary battery at the low temperature can also be reduced, and the storage characteristic of the secondary battery at the high temperature can be further improved.

Specifically, from the perspective of improving the storage characteristic of the secondary battery at the high temperature, in some embodiments, with respect to 100 parts by mass of the electrolyte, a mass of the compound having the sulfur-oxygen double bond is a parts by mass, a ranges from 0.05 to 3, in some embodiments, a ranges from 0.05 to 2.9, and in some embodiments, a ranges from 0.25 to 2.16. In some embodiments, a ranges from 1.35 to 2.9. In some embodiments, a is 0.05, 0.25, 0.35, 0.52, 0.65, 0.78, 0.82, 1.35, 1.50, 1.88, 2.16, 2.45, 2.66, 2.90, or a value falling within a range formed by any two of these values. For example, a is 0.05 to 1.35, 0.25 to 1.50, 0.35 to 1.88, 0.65 to 2.16, or 0.82 to 2.66, and when a is within the aforementioned ranges, it contributes to further improving the storage characteristic at the high temperature.

Specifically, the compound having the sulfur-oxygen double bond includes sulfonate and/or sulfate.

The sulfonate includes at least one of 1,3-propane sultone, 1,4-butane sultone, 1-fluoro-1,3-propane sultone, 1-methyl-1,3-propane sultone, 1-propene-1,3-sultone, 1-fluoro-1-propene-1,3-sultone, 1-methyl-1-propene-1,3-sultone, or 1,5,2,4-Dioxadithiane 2,2,4,4-tetraoxide.

The sulfate includes at least one of ethylene sulfate or propylene sulfate.

One or two or more of the aforementioned compound having the sulfur-oxygen double bond may be used. In the case of two or more lithium difluorophosphate, a represents the total content. It is preferable to use a combination of 1,3-propane sultone and ethylene sulfate, which can further improve the storage characteristic of the secondary battery at the high temperature.

Specifically, from the perspective of improving the storage characteristic of the secondary battery at the high temperature, in some embodiments, with respect to 100 parts by mass of the electrolyte, a mass of the lithium difluorophosphate is b parts by mass, and b ranges from 0.02 to 0.59. In some embodiments, b ranges from 0.05 to 0.38. In some embodiments, b ranges from 0.12 to 0.59. In some embodiments, b is 0.02, 0.03, 0.05, 0.07, 0.12, 0.16, 0.27, 0.38, 0.45, 0.59, or a value falling within a range formed by any two of these values. For example, b is 0.02 to 0.12, 0.03 to 0.38, 0.05 to 0.59, 0.12 to 0.38, or 0.27 to 0.59, and when b is within the aforementioned ranges, it contributes to further improving the storage characteristic at the high temperature.

In addition, the electrolyte may further include an additive C, and the additive C includes at least one of adiponitrile, hexamethyldisiloxane, 1,3-diethenyl-1,1,3,3-tetramethyldisiloxane, lithium bis(oxalato)borate, lithium difluoro(oxalato)borate, lithium tetrafluoro(oxalato)phosphate, or lithium difluorobis(oxalato)phosphate. One or two or more of the aforementioned additive C may be used.

The applicants also unexpectedly discovered that the additive C can not only inhibit the decomposition of the polyamideimide in the charge-discharge process but also further reduce the impedance of films of the compound having the sulfur-oxygen double bond and the lithium difluorophosphate, thereby further improving the flexibility of the positive electrode, reducing the internal resistance of the secondary battery at the low temperature and improving the storage characteristic of the secondary battery at the high temperature.

With respect to 100 parts by mass of the electrolyte, a content of the additive C is 0.1 parts by mass or more, preferably 0.1 parts by mass or more, more preferably 0.28 parts by mass or more, and further preferably 0.60 parts by mass or more. In addition, from the perspective of reducing the internal resistance of the secondary battery at the low temperature, the content of the additive C is 3 parts by mass or less, preferably 2.82 parts by mass or less, more preferably 2.55 parts by mass or less, and further preferably 1.86 parts by mass or less.

The lithium salt used in the electrolyte of this application includes lithium hexafluorophosphate. Based on the total mass of the electrolyte, a content of the lithium hexafluorophosphate ranges from 9 mass% to 15 mass%, preferably from 9 mass% to 13 mass%, and more preferably from 9 mass% to 12 mass%. By setting the content within the aforementioned range, reduction of the internal resistance at the low temperature and improvement of the storage characteristic at the high temperature can be better balanced.

The electrolyte of this application may further include any non-aqueous solvent known in the prior art suitable for use as a solvent of the electrolyte. For example, the non-aqueous solvent may be cyclic carbonate, chain carbonate, cyclic carboxylic ester, chain carboxylic ester, cyclic ether, chain ether, phosphorus-containing organic solvent, and sulfur-containing organic solvent. The chain carboxylic ester is preferred, such as ethyl acetate, ethyl fluoroacetate, ethyl propionate, and propyl propionate.

In some embodiments, the electrolyte is not particularly limited, and materials that are well known as electrolytes may be used arbitrarily. The mass of the electrolyte is not particularly limited, as long as it does not impair the effect of this application.

### III. Negative Electrode

The negative electrode includes a negative current collector and a negative active material layer disposed on the surface of the negative current collector. The negative active material layer includes a negative active material. In some embodiments, the rechargeable capacity of the negative active material is greater than the discharge capacity of the positive active material to prevent unintentional precipitation of lithium metal on the negative electrode during charging.

As the current collector for maintaining the negative active material, any well-known current collector may be used. Examples of the negative current collector include, but are not limited to, metal materials such as copper, nickel, stainless steel, and nickel-plated steel. In some embodiments, the negative current collector is copper.

There is no particular limitation on the negative active material, as long as it is capable of reversibly occluding and releasing lithium ions. Examples of the negative active material may include, but are not limited to, carbon materials such as natural graphite, and artificial graphite; metals such as silicon (Si), and stannum (Sn); or oxides of metal elements such as Si, and Sn. The negative active materials may be used alone or in combination.

The negative active material layer may further include a negative electrode binder. The negative electrode binder can improve the binding among negative active material particles and the binding between the negative active material and the negative current collector. There is no special limitation on the type of negative electrode binder, as long as it is a material that is stable for the electrolyte or the solvent used in the manufacture of the electrode. In some embodiments, the negative electrode binder includes a resin binder. Examples of the resin binder include, but are not limited to, fluororesin, polyacrylonitrile (PAN), polyimide resin, acrylic resin, polyolefin resin, and the like. When an aqueous solvent is used to prepare a negative electrode mixture slurry, the negative electrode binder includes, but is not limited to, carboxymethylcellulose (CMC) or a salt thereof, styrene-butadiene rubber (SBR), polyacrylic acid (PAA) or a salt thereof, polyvinyl alcohol, and the like.

The negative electrode may be prepared by the following method: the negative electrode mixture slurry containing the negative active material, the resin binder, and the like is applied onto the negative current collector, dried, and then calendared to form negative active material layers on both surfaces of the negative current collector, thereby obtaining the negative electrode.

### IV. Separator

A separator is typically disposed between the positive electrode and the negative electrode in order to prevent short circuits. In this case, the electrolyte of this application is typically used by penetrating the separator.

There is no special limitation on the material and shape of the separator, as long as is does not significantly impair the effect of this application. The separator may be a resin, glass fiber, inorganic compound, etc. formed from a material for stabilizing the electrolyte of this application. In some embodiments, the separator includes a porous sheet with excellent liquid retention, a material in a nonwoven-like form, and the like. Examples of materials of the resin or glass fiber separator may include, but are not limited to, polyolefin, aromatic polyamide, polyethersulfone, and the like. In some embodiments, the polyolefin is polyethylene or polypropylene. In some embodiments, the polyolefin is polypropylene. The materials of the aforementioned separator may be used alone or in any combination.

The separator may also be a material formed by laminating the aforementioned materials, examples of which include, but are not limited to, a three-layer separator formed by laminating polypropylene, polyethylene and polypropylene in order, and the like.

Examples of the inorganic compounds may include, but are not limited to, oxides such as alumina, and silica, nitrides such as aluminum nitride, and silicon nitride, and sulfates (e.g., barium sulfate, and calcium sulfate). The inorganic compound form may include, but is not limited to, granular or fibrous.

The form of the separator may be in the form of a film, examples of which include, but are not limited to, nonwoven fabrics, woven fabrics, microporous membranes, and the like. In the form of the film, the separator has a pore size of 0.01 µm to 1 µm and a thickness of 5 µm to 50 µm. In addition to the aforementioned independent film-like separator, the following separator may also be used: a separator formed by forming a composite porous layer containing the aforementioned inorganic compound particles on the surface of the positive electrode and/or the negative electrode by using a resin-based binder, e.g., a separator formed by using resin as a binder to cause 90% of alumina particles having a particle size of less than 1 µm to form porous layers on both sides of the positive electrode.

The thickness of the separator is arbitrary. In some embodiments, the thickness of the separator is greater than 1 µm, greater than 5 µm, or greater than 8 µm. In some embodiments, the thickness of the separator is less than 50 µm, less than 40 µm, or less than 30 µm. When the thickness of the separator is within the aforementioned range, the insulativity and mechanical strength can be ensured, and the rate characteristic and energy density of the secondary battery can also be ensured.

This application further provides an electronic device, including the secondary battery described according to this application.

The use of the secondary battery of this application is not specifically limited and the secondary battery may be used in any electronic device known in the prior art. In some embodiments, the secondary battery of this application may be used in, but is not limited to, a notebook computer, a pen-input computer, a mobile computer, an electronic book player, a portable phone, a portable fax machine, a portable copier, a portable printer, a headphone, a video recorder, a liquid crystal television, a hand-held cleaner, a portable CD machine, a mini disc, a transceiver, an electronic organizer, a calculator, a memory card, a portable audio recorder, a radio, a backup power supply, a motor, an automobile, a motorcycle, a power bicycle, a bicycle, a lighting appliance, a toy, a game machine, a clock, a power tool, a flash light, a camera, a large household storage battery, a lithium-ion capacitor, and the like.

The preparation of the secondary battery is illustrated in combination with specific embodiments below. A person skilled in the art should understand that a preparation method described in this application is only an example, and any other suitable preparation methods are within the scope of this application.

### Preparation of Secondary Battery

Positive active materials lithium cobalt oxide (97 parts by mass) and acetylene black (1.5 parts by mass) are mixed, added to a solution obtained by pre-dissolving polyamideimide (Toyobo Co., Ltd., HR-16NN,1.5 parts by mass) in 1-methyl-2-pyrrolidinone, and mixed to prepare a positive electrode mixture paste. The positive electrode mixture paste is applied to aluminum foil, dried, pressed, and cut to a specified size to prepare a positive electrode. If the auxiliary (as shown in Table 1-1) is added, the content of the polyamideimide is adjusted to 1.3 parts by mass, and the auxiliary is 0.2 parts by mass.

Negative active materials artificial graphite and silicon-carbon (a mass ratio of 97: 3, totaling 96 parts by mass) are mixed with styrene-butadiene rubber (2 parts by mass) and added to a solution obtained by dissolving lithium carboxymethylcellulose (2 parts by mass) in deionized water, followed by mixing to prepare a negative electrode mixture paste. The negative electrode mixture paste is applied to copper foil, dried, pressed, and cut to a specified size to prepare a negative electrode.

A 5µm polyethylene porous membrane is used as a separator.

The positive electrode and the negative electrode prepared as above are each connected to a conducting wire. Lamination and winding are performed via the aforementioned separator. Furthermore, LiPF₆ as a supporting electrolyte is separately dissolved in a solution containing ethylene carbonate, propylene carbonate, propyl propionate, a compound having a sulfur-oxygen double bond, lithium difluorophosphate, and an additive C. Based on 100 parts by mass of the total mass of an electrolyte, mass contents and components of the compound having the sulfur-oxygen double bond, the lithium difluorophosphate and the additive C are shown in Tables 1-2, 2 and 3. The mass content of LiPF₆ is 14%, and the rest are ethylene carbonate, propylene carbonate and propyl propionate (a mass ratio of 2: 1.8: 4).

Subsequently, the winding body and 3.2 g of the electrolyte are housed in an aluminum laminate housing. The opening portion of the housing is heat-sealed, and a secondary battery is prepared through formation, capacity adjustment, and other steps. The secondary battery is a pouch-type secondary battery with a width of 35 mm, a height of 48 mm, and a thickness of 5 mm.

### Table 1

**Table 1-1 Auxiliary**

| **Serial number** | **Name** |
|---|---|
| Auxiliary 1 | Pentaerythritol tetrabenzoate |
| Auxiliary 2 | Trimethyl citrate |
| Auxiliary 3 | Triethyl citrate |
| Auxiliary 4 | Tributyl citrate |
| Auxiliary 5 | Bis(tridecyl) sodium sulfosuccinate |

**Table 1-2 Additive Code**

| Name | Code | Name | Code |
|---|---|---|---|
| 1,3-propane sultone | A1 | 1,4-butane sultone | A2 |
| 1-fluoro-1,3-propane sultone | A3 | 1-methyl-1,3-propane sultone | A4 |
| 1-propene-1,3-sultone | A5 | 1-fluoro-1-propene-1,3-sultone | A6 |
| 1-methyl-1-propene-1,3-sultone | A7 | 1,5,2,4-Dioxadithiane 2,2,4,4-tetraoxide | A8 |
| Ethylene sulfate | A9 | Propylene sulfate | A10 |
| Adiponitrile | C1 | Hexamethyldisiloxane | C2 |
| 1,3-diethenyl-1,1,3,3-tetramethyldisiloxane | C3 | Lithium bis(oxalato)borate | C4 |
| Lithium difluoro(oxalato)borate | C5 | Lithium tetrafluoro(oxalato)phosphate | C6 |
| Lithium difluorobis(oxalato)phosphate | C7 | | |

### Test Method

### Flexibility of Positive Electrode

Mandrels with different diameters are placed on the current collector side of the prepared positive electrode, the positive electrode is wound around the mandrels, and whether a positive composite material layer cracks is evaluated. The smaller the diameter of the mandrels, the better the flexibility of the positive electrode. When the flexibility of the positive electrode is superior, peeling of the positive composite material layer can be suppressed, such that the cycling performance of the secondary battery is superior.
A: No cracking observed when using a mandrel with a diameter of 1.2 mm.
B: No cracking observed when using a mandrel with a diameter of 1.5 mm.
C: No cracking observed when using a mandrel with a diameter of 2 mm.
D: No cracking observed when using a mandrel with a diameter of 3 mm.
E: No cracking observed when using a mandrel with a diameter of 4 mm.

### Internal Resistance at Low Temperature

After the prepared lithium-ion secondary battery is allowed to stand for 5 hours in a 25 °C environment, a thickness (d0) of the battery is measured. Subsequently, the secondary battery is charged at a constant current-constant voltage (CC-CV charging) of 1 C up to 4.6 V (cutoff condition: 0.05 C), and discharged at a constant current of 1 C (CC discharging) down to 3 V. This operation is repeated for 500 cycles in the 25 °C environment.

Upon completion of the 500 cycles, the secondary battery is charged at CC-CV of 1 C up to 4.6 V (cutoff condition: 0.05 C) in the -20° C environment, and a thickness (d1) of the battery in the charged state is measured. A thickness increase rate at the low temperature is then calculated as {(d1 - d0) / d0} × 100 (%), and evaluated according to the following criteria. A lower value of the thickness increase rate at the low temperature indicates better suppression of the internal resistance of the secondary battery at the low temperature.
A: The thickness increase rate at the low temperature is less than 5%.
B: The thickness increase rate at the low temperature is 5% or more but less than 8%.
C: The thickness increase rate at the low temperature is 8% or more and less than 10%.
D: The thickness increase rate at the low temperature is 10% or more.

### Storage Characteristic at High Temperature

For the prepared lithium-ion secondary battery, the battery is charged to 4.6 V by a constant current method at 0.1 C in the 25° C environment and then stored at 80 °C for 100 hours. An open circuit voltage (hereinafter referred to as "OCV") before the start of storage at 80°C and an OCV of a cell after 100 hours of storage at 80°C are measured, and a ratio of the OCV after 100 hours of storage at 80°C to the OCV before the start of storage at 80°C is calculated as an OCV maintenance ratio, which is evaluated using the following benchmarks. The larger the OCV maintenance ratio, the better the storage characteristic at the high temperature, i.e., the better the lifetime characteristic.
A: The OCV maintenance ratio is 99.0% or more.
B: The OCV maintenance ratio is 98.5% or more but less than 99.0%.
C: The OCV maintenance ratio is 98.0% or more but less than 98.5%.
D: The OCV maintenance ratio is less than 98.0%.

### Test Result

**Table 2**

| | **Compoun d having sulfur-oxygen double bond** | **a** | **b** | **Flexibility of positive electrode** | **Internal resistance at low temperatu re** | **Storage at high temperatu re** |
|---|---|---|---|---|---|---|
| Embodime nt 1-1 | A1 | 0.52 | 0.02 | B | B | B |
| Embodime nt 1-2 | A2 | 0.35 | 0.03 | B | B | B |
| Embodime nt 1-3 | A3 | 0.82 | 0.05 | B | B | B |
| Embodime nt 1-4 | A4 | 0.55 | 0.12 | B | B | B |
| Embodime nt 1-5 | A5 | 0.53 | 0.27 | B | B | B |
| Embodime nt 1-6 | A6 | 0.78 | 0.38 | B | B | B |
| Embodime nt 1-7 | A7 | 0.65 | 0.59 | B | B | B |
| Embodime nt 1-8 | A8 | 1.39 | 0.05 | B | B | B |
| Embodime nt 1-9 | A9 | 2.66 | 0.15 | B | B | B |
| Embodime nt 1-10 | A10 | 0.41 | 0.45 | B | B | B |
| Embodime nt 1-11 | A7 | 0.05 | 0.26 | B | B | B |
| Embodime nt 1-12 | A7 | 0.25 | 0.32 | B | B | B |
| Embodime nt 1-13 | A7 | 0.89 | 0.11 | B | B | B |
| Embodime nt 1-14 | A1 | 1.35 | 0.05 | B | B | B |
| Embodime nt 1-15 | A1 | 2.16 | 0.03 | B | B | B |
| Embodime nt 1-16 | A7 | 2.45 | 0.07 | B | B | B |
| Embodime nt 1-17 | A7 | 2.9 | 0.09 | B | B | B |
| Embodime nt 1-18 | A1+A7 | 1.32+0.45 | 0.16 | B | B | A |
| Embodime nt 1-19 | A1+A9 | 1.66+0.58 | 0.08 | B | B | A |
| Embodime nt 1-20 | A7+A9 | 0.67+0.43 | 0.25 | B | B | A |
| Comparati ve Embodime nt 1-1 | None | 0 | 0.05 | D | D | C |
| Comparati ve Embodime nt 1-2 | A7 | 0.89 | 0 | C | D | D |
| Comparati ve Embodime nt 1-3 | None | 0 | 0 | D | D | D |

**Table 3**

| | **Compo und having a sulfur-oxygen double bond** | **a** | **b** | **Auxilia ry** | **Additiv e C** | **Flexibil ity of positive electro de** | **Interna l resistan ce at low temper ature** | **Storage at high temper ature** |
|---|---|---|---|---|---|---|---|---|
| Embodi ment 2-1 | A1 | 0.52 | 0.02 | Auxiliar y 1 | None | A | B | B |
| Embodi ment 2-2 | A2 | 0.35 | 0.03 | Auxiliar y 2 | None | A | B | B |
| Embodi ment 2-3 | A3 | 0.82 | 0.05 | Auxiliar y 3 | None | A | B | B |
| Embodi ment 2-4 | A4 | 0.55 | 0.12 | Auxiliar y 4 | None | A | B | B |
| Embodi ment 2-*5* | A5 | 0.53 | 0.27 | Auxiliar y 5 | None | A | B | B |
| Embodi ment 2-6 | A6 | 0.78 | 0.38 | Auxiliar y 1 | None | A | B | B |
| Embodi ment 2-7 | A7 | 0.65 | 0.59 | Auxiliar y 2 | None | A | B | B |
| Embodi ment 2-8 | A8 | 1.39 | 0.05 | Auxiliar y 3 | None | A | B | B |
| Embodi ment 2-9 | A9 | 2.66 | 0.15 | Auxiliar y 4 | None | A | B | B |
| Embodi ment 2-10 | A10 | 0.41 | 0.45 | Auxiliar y 5 | None | A | B | B |
| Embodi ment 2-11 | A1+A7 | 1.32+0. 45 | 0.16 | Auxiliar y 1 | None | A | B | A |
| Embodi ment 2-12 | A1+A9 | 1.66+0. 58 | 0.08 | Auxiliar y 2 | None | A | B | A |
| Embodi ment 2-13 | A7+A9 | 0.67+0. 43 | 0.25 | Auxiliar y 3 | None | A | B | A |
| Embodi ment 2-14 | A1 | 0.52 | 0.02 | None | C1(1.58 ) | B | B | A |
| Embodi ment 2-15 | A7 | 0.65 | 0.59 | None | C2(0.52 ) | B | B | A |
| Embodi ment 2-16 | A9 | 2.66 | 0.15 | None | C3(0.60 ) | B | B | A |
| Embodi ment 2-17 | A1+A7 | 1.32+0. 45 | 0.16 | None | C4(0.13 ) | B | A | A |
| Embodi ment 2-18 | A1+A9 | 1.66+0. 58 | 0.08 | None | C5(0.28 ) | B | A | A |
| Embodi ment 2-19 | A7+A9 | 0.67+0. 43 | 0.25 | None | C6(0.10 ) | B | A | A |
| Embodi ment 2-20 | A1+A7 | 1.32+0. 45 | 0.16 | None | C7(0.12 ) | B | A | A |
| Embodi ment 2-21 | A1+A9 | 1.66+0. 58 | 0.08 | None | C1(1.65 ) | B | A | A |
| Embodi ment 2-22 | A7+A9 | 0.67+0. 43 | 0.25 | None | C1(1.25 ) | B | A | A |
| Embodi ment 2-23 | A1 | 0.52 | 0.02 | Auxiliar y 1 | C1(1.08 ) | A | A | A |
| Embodi ment 2-24 | A7 | 0.65 | 0.59 | Auxiliar y 2 | C2(0.52 ) | A | A | A |
| Embodi ment 2-25 | A9 | 2.66 | 0.15 | Auxiliar y 3 | C3(0.60 ) | A | A | A |
| Embodi ment 2-26 | A1+A7 | 1.32+0. 45 | 0.16 | Auxiliar y 4 | C4(0.13 ) | A | A | A |
| Embodi ment 2-27 | A1+A9 | 1.66+0. 58 | 0.08 | Auxiliar y 5 | C5(0.28 ) | A | A | A |
| Embodi ment 2-28 | A7+A9 | 0.67+0. 43 | 0.25 | Auxiliar y 1 | C6(0.15 ) | A | A | A |
| Embodi ment 2-29 | A1+A7 | 1.32+0. 45 | 0.16 | Auxiliar y 2 | C7(0.12 ) | A | A | A |
| Embodi ment 2-30 | A1+A9 | 1.66+0. 58 | 0.08 | Auxiliar y 3 | C1(0.85 ) | A | A | A |
| Embodi ment 2-31 | A7+A9 | 0.67+0. 43 | 0.25 | Auxiliar y 1 | C1(1.45 )+C2(0. 55) | A | A | A |
| Embodi ment 2-32 | A7+A9 | 0.67+0. 43 | 0.25 | Auxiliar y 1 | C1(1.25 )+C4(0. 61) | A | A | A |
| Embodi ment 2-33 | A7+A9 | 0.67+0. 43 | 0.25 | Auxiliar y 1 | C1(2.30 )+C3(0. 70) | A | A | A |
| Embodi ment 2-34 | A7+A9 | 0.67+0. 43 | 0.25 | Auxiliar y 1 | C1(1.55 )+C5(0. 25) | A | A | A |

In Tables 2 to 3, with respect to 100 parts by mass of the electrolyte, a represents the parts by mass of the compound having the sulfur-oxygen double bond, b represents the parts by mass of the lithium difluorophosphate, and the numbers in parentheses indicate the parts by mass of the corresponding materials.

When the positive active material layer includes the positive active material and the polyamideimide, and the electrolyte includes the compound having the sulfur-oxygen double bond and the lithium difluorophosphate, the flexibility of the positive electrode can be improved, the internal resistance of the secondary battery at the low temperature can also be reduced, and the storage characteristic of the secondary battery at the high temperature can be further improved. In particular, when the electrolyte includes at least two of the aforementioned compounds having the sulfur-oxygen double bond, the storage characteristic of the secondary battery at the high temperature can be further improved.

Particularly, when the positive active material layer further includes the auxiliary, for example, pentaerythritol tetrabenzoate, trimethyl citrate, triethyl citrate, tributyl citrate, or bis(tridecyl) sodium sulfosuccinate, it can inhibit excessively large impedance of the film of the lithium difluorophosphate formed on the surface of the positive electrode and further improve the flexibility of the positive electrode.

Particularly, when the electrolyte further includes the additive C, the applicants also unexpectedly discovered that the additive C can not only inhibit the decomposition of the polyamideimide in the charge-discharge process but also further reduce the impedance of the films of the compound having the sulfur-oxygen double bond and the lithium difluorophosphate, thereby further reducing the internal resistance of the secondary battery at the low temperature and improving the storage characteristic of the secondary battery at the high temperature.

Throughout the description, references to "embodiments," "part of embodiments," "an embodiment," "another example," "an example," "a specific example," or "a partial example" are meant to imply that at least one of the embodiments or examples in this application includes a particular feature, structure, material, or characteristic described in that embodiment or example. Therefore, the descriptions appearing throughout the specification, such as "in some embodiments," "in embodiments," "in one embodiment," "in another example," "in an example," "in a particular example," or "examples," are not necessarily references to the same embodiments or examples in this application. In addition, the particular features, structures, materials, or characteristics in this application may be combined in one or more embodiments or examples in any suitable manner.

Although the illustrative embodiments have been demonstrated and described, a person skilled in the art should understand that the above embodiments are not to be construed as a limitation of this application, and embodiments may be altered, substituted, and modified without departing from the spirit, principles, and scope of this application.

## Claims

1. A secondary battery, **characterized in that** the secondary battery comprises: a positive electrode, a negative electrode, and an electrolyte; wherein the positive electrode comprises a positive current collector and a positive active material layer formed on the positive current collector, the positive active material layer comprises a positive active material and polyamideimide, and the electrolyte comprises a compound having a sulfur-oxygen double bond and lithium difluorophosphate.

2. The secondary battery according to claim 1, **characterized in that** the positive active material layer further comprises an auxiliary; and the auxiliary comprises at least one of pentaerythritol tetrabenzoate, trimethyl citrate, triethyl citrate, tributyl citrate, or bis(tridecyl) sodium sulfosuccinate.

3. The secondary battery according to claim 1 or 2, **characterized in that** with respect to 100 parts by mass of the electrolyte, the compound having the sulfur-oxygen double bond is 0.05 parts by mass to 2.9 parts by mass.

4. The secondary battery according to any one of claims 1 to 3, **characterized in that** with respect to 100 parts by mass of the electrolyte, the lithium difluorophosphate is 0.02 parts by mass to 0.59 parts by mass.

5. The secondary battery according to any one of claims 1 to 4, **characterized in that** the compound having the sulfur-oxygen double bond comprises a sulfonate.

6. The secondary battery according to any one of claims 1 to 5, **characterized in that** the compound having the sulfur-oxygen double bond comprises a sulfate.

7. The secondary battery according to claim 5 or 6, **characterized in that** the compound having the sulfur-oxygen double bond comprises a sulfonate; the sulfonate comprises at least one of 1,3-propane sultone, 1,4-butane sultone, 1-fluoro-1,3-propane sultone, 1-methyl-1,3-propane sultone, 1-propene-1,3-sultone, 1-fluoro-1-propene-1,3-sultone, 1-methyl-1-propene-1,3-sultone, or 1,5,2,4-Dioxadithiane 2,2,4,4-tetraoxide.

8. The secondary battery according to any one of claims 5 to 7, **characterized in that** the compound having the sulfur-oxygen double bond comprises a sulfate; the sulfate comprises at least one of ethylene sulfate or propylene sulfate.

9. The secondary battery according to any one of claims 1 to 8, **characterized in that** the electrolyte further comprises an additive C; and the additive C comprises at least one of adiponitrile, hexamethyldisiloxane, 1,3-diethenyl-1,1,3,3-tetramethyldisiloxane, lithium bis(oxalato)borate, lithium difluoro(oxalato)borate, lithium tetrafluoro(oxalato)phosphate, or lithium difluorobis(oxalato)phosphate.

10. The secondary battery according to claim 9, **characterized in that** with respect to 100 parts by mass of the electrolyte, the additive C is 0.1 parts by mass to 3 parts by mass.

11. The secondary battery according to claim 9 or 10, **characterized in that** with respect to 100 parts by mass of the electrolyte, at least one of the following conditions is satisfied:
1) the additive C comprises adiponitrile, the adiponitrile is 0.1 parts by mass to 2.4 parts by mass;
2) the additive C comprises hexamethyldisiloxane, the hexamethyldisiloxane is 0.01 parts by mass to 0.6 parts by mass;
3) the additive C comprises 1,3-diethenyl-1,1,3,3-tetramethyldisiloxane, the 1,3-diethenyl-1,1,3,3-tetramethyldisiloxane is 0.01 parts by mass to 1 parts by mass; or
4) the additive C comprises lithium bis(oxalato)borate, the lithium bis(oxalato)borate is 0.01 parts by mass to 0.5 parts by mass.

12. The secondary battery according to any one of claims 9 to 11, **characterized in that** with respect to 100 parts by mass of the electrolyte, the additive C comprises lithium difluoro(oxalato)borate, the lithium difluoro(oxalato)borate is 0.01 parts by mass to 0.5 parts by mass.

13. The secondary battery according to any one of claims 9 to 12, **characterized in that** with respect to 100 parts by mass of the electrolyte, the additive C comprises lithium tetrafluoro(oxalato)phosphate, the lithium tetrafluoro(oxalato)phosphate is 0.01 parts by mass to 0.5 parts by mass.

14. The secondary battery according to any one of claims 9 to 13, **characterized in that** with respect to 100 parts by mass of the electrolyte, the additive C comprises lithium difluorobis(oxalato)phosphate, the lithium difluorobis(oxalato)phosphate is 0.01 parts by mass to 0.7 parts by mass.

15. An electronic device, **characterized in that** the electronic device comprises the secondary battery according to any one of claims 1 to 14.
